# EUROPEAN PATENT SPECIFICATION

(11) **EP 0 672 838 B1**
(45) Date of publication and mention of the grant of the patent: **08.10.1997**
(21) Application number: 95300820.8
(22) Date of filing: 09.02.1995
(51) Int. Cl.: F16B 19/10

(54) **Blind rivet assembly**
Blindnietanordnung
Assemblage d'un rivet aveugle

(30) Priority: 19.02.1994 GB 9403224
(43) Date of publication of application: 20.09.1995
(73) Proprietor: EMHART INC., Newark, Delaware 19711 (US)
(72) Inventor: Smith, Daniel Robin, Birmingham B36 9BG (GB)
(74) Representative: Randall, John Walter

(56) References cited:
- EP-A- 0 142 960
- DE-A- 3 602 389

## Description

This invention is concerned with blind rivet assemblies.

A common type of blind rivet assembly comprises a mandrel and a rivet body. The mandrel comprises a head and a stem. The rivet body comprises a head flange and a generally cylindrical shank. A bore extends through the shank and the flange and the mandrel stem is positioned in the bore with an underside of the mandrel head engaging an annular tail end face of the shank of the rivet body.

Such a rivet is set in a work piece by using a tool which engages the head flange of the rivet body and withdraws the mandrel, thus causing the shank of the rivet on the blind side of the workpiece to expand to form a head on that side.

It has been proposed, for example in EP 536957, to provide circumferential grooves in the shank of the rivet body of such a blind riveting assembly. Such grooves assist in providing for controlled expansion of the rivet on setting, thus providing for a better performance. However the grooves proposed have been generally semicircular in cross section. This has the result that, when a rivet body is inserted into a hole in a workpiece the groove may catch on a leading edge of the hole. While this can easily be corrected so that the rivet moves freely into the hole, such correction interrupts the riveting operation and wastes time. Further if such correction is not properly made, the rivet body may fail to be fully inserted into the hole in the workpiece before setting, thus resulting in improper setting of the rivet.

Further, while the setting of such a grooved rivet, particular in a workpiece of a thickness appropriate to the position of the grooves in the rivet, is usually better than that of a comparable ungrooved rivet, the setting is sometimes less that optimum in that the deformation of the rivet body tends to be by a bulging action about the bottom of the groove and not, as is particularly desirable by the drawing of an enlargement of the rivet body wall towards the workpiece.

It is one of the various objects of the present invention to provide an improved blind rivet assembly.

The present invention provides as one of its features
a blind rivet assembly comprising a mandrel and a rivet body, the rivet body comprising a head flange and a generally cylindrical shank, a generally uniform bore extending through the shank and the head flange, and the shank being provided with at least one circumferential groove, characterised in that the groove has a cross section which comprises a generally circular portion remote from the head flange and a straight portion inclined to the axis of the rivet body nearer to the head flange.

Preferably in a rivet assembly according to the invention the circular portion of the cross section is approximately one quarter of a circle and meets the surface of the shank at 90°.

Preferably also the straight portion of the cross section meets the surface of the shank at between 15° and 30°.

A rivet according to the invention may comprise two or more such grooves.

There now follows a description, to be read with reference to the accompanying drawings, of a rivet assembly embodying the invention.

In the accompanying drawings
Figure 1 shows a blind rivet assembly embodying the invention partially broken away;
Figure 2 shows an enlarged detail of Figure 1;
Figure 3 shows a prior art groove in a rivet;
Figure 4 shows the behaviour of the prior art groove in a setting operation;
Figure 5 shows an enlarged detail of Figure 1, showing a groove in the rivet;
Figure 6 shows the behaviour of the groove of Figure 5 on setting.

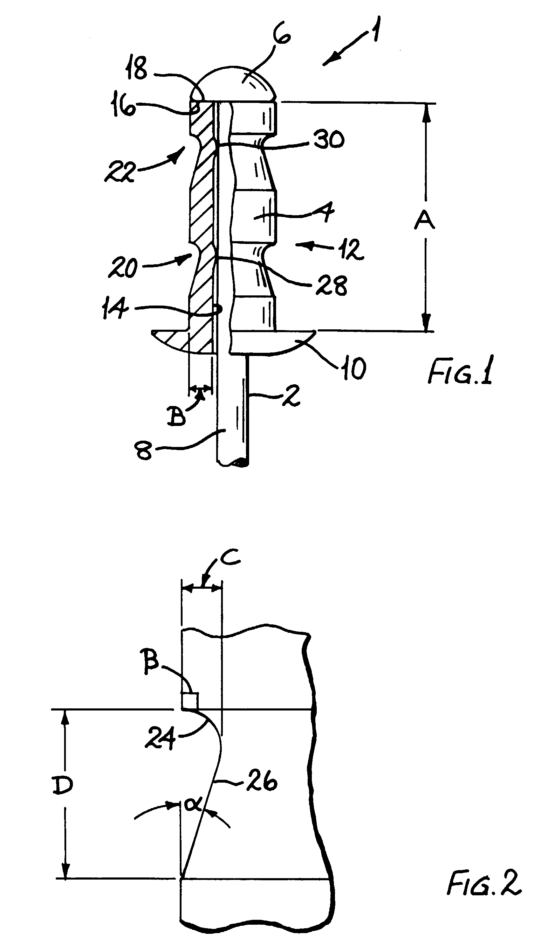

A blind rivet assembly 1 (Figures 1 & 2) comprises a mandrel 2 and a rivet body 4. The mandrel 2 comprises a head 6 and a stem 8. The rivet body 4 comprises a head flange 10 and a generally cylindrical shank 12. A generally uniform bore 14 extends through the flange 10 and the shank 12, and the mandrel stem 8 is positioned in the bore with a flat underside 16 of the mandrel head 6 engaging a flat annular tail end face 18 of the shank 12 of the rivet body 4, the face 18 and the underside 16 being of substantially the same diameter.

The stem 8 is of somewhat smaller diameter than the bore 14.

The shank 12 of the rivet body is provided with at least one and in the embodiment shown two circumferential grooves 20, 22. These grooves 20, 22 are formed by a rolling operation and each have a cross section, Figure 2, which comprises a generally circular portion 24 which is remote from the head flange 10, and a straight portion 26 inclined to the axis of the rivet body 4 and nearer to the head flange 10. The circular portion 24 meets the surface of the shank 12 at an angle which is 90°, and comprises approximately one quarter of a circle. The straight portion 26 meets the surface of the shank 12 at an angle x, which is about 18° in the embodiment described, but could be between 15° and 30°. The circular portion may be somewhat less than a quarter circle and may meet the surface of the shank 12 at an angle at which is slightly greater than 90°.

The formation of the grooves 22 and 24 by rolling results in the formation of a bump 28, 30 opposite the groove which bumps engage the stem 8 of the mandrel 2. A slight thinning of the wall of the rivet body occurs at the bottom of the groove 22, 24.

The material of which the rivet body is made is preferably one with relatively low work hardening characteristics, e.g. aluminium, low carbon steel or copper.

Satisfactory dimensions of a typical such rivet assembly have been found to be:
1. Diameter of mandrel stem 2.29mm
2. Diameter of bore 14 2.33mm
3. Length of rivet shank (A) 9.00mm
4. Thickness of rivet body wall (B) 0.83mm
5. Depth of groove (C) 0.125mm - 0.25 mm
6. Width of groove (D) 1mm - 1.75 mm

When the rivet assembly is in use, it is inserted into a hole in a workpiece which is of a thickness less than the distance between the head flange 10 and the beginning of the groove 22, and more than the distance between the head flange 10 and the end of the groove 20, i.e. the groove 20 is entirely within the workpiece. If a workpiece of lesser thickness is to be riveted, a rivet assembly of lesser length, with possibly only one groove, which groove is adjacent and outside the far face of the workpiece when the rivet assembly is inserted, will be used.

On inserting the blind rivet assembly into a workpiece, no difficulty is caused by the grooves 20 and 22 catching on the edge of the hole in the workpiece as such edge slides freely along the straight portion 26 of such groove.

The blind rivet assembly 1 also shows desirable setting characteristics. It will be understood that the rivet assembly is set by use of a tool which restrains movement of the head flange 10 while engaging the mandrel 2 and withdrawing the mandrel 2 relative to the rivet body 4. With a workpiece of the appropriate thickness as mentioned above, expansion of the rivet body occurs at the groove 20 to fill the hole in the workpiece. At the groove 22, which expands to form a head on the blind side of the workpiece the rivet body deforms as indicated in Figures 5 and 6. The rivet body folds at the groove 22, approximately at the point x where the curved portion 24 meets the straight portion 26; the portion of the groove below the point x bows outward to some extent and the material of the wall of the rivet body is compressed: the portion of the groove above the point x develops into a skirt, as shown in Figure 6, which moves down to surround the portion of the wall below it. The points A and B at the end of the groove (see Figure 5) move approximately into the positions shown in Figure 6. This provides a setting head of a very desirable external diameter which can readily be drawn down to engage the surface of the workpiece on its blind side.

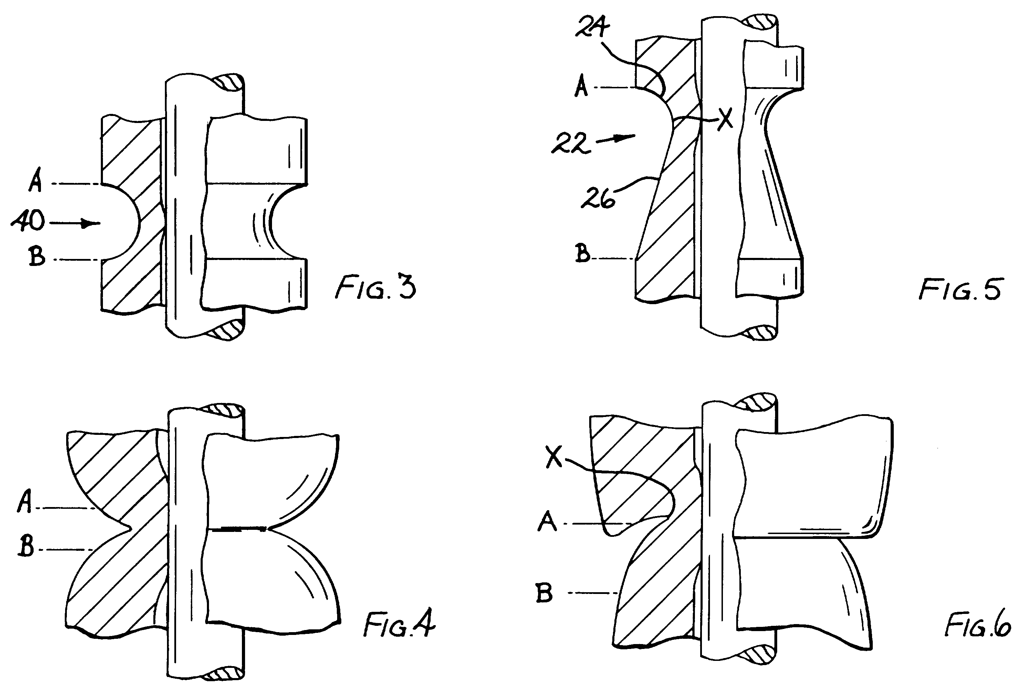

Figures 3 and 4 show how setting proceeds, in a similar situation, with a known groove 40 which is semi circular in cross section. It can be seen that such a groove 40 provides for a general bulging of the rivet body in the region of the groove, which provides for a setting which may be satisfactory but is not as effective as that with the assembly 1.

## Claims

1. A blind rivet assembly comprising a mandrel (2) and a rivet body (4), the rivet body (4) comprising a head flange (10) and a generally cylindrical shank (12), a generally uniform bore (14) extending through the shank (12) and the head flange (10), and the shank (12) being provided with at least one circumferential groove (20, 22), characterised in that the groove (20, 22) has a cross section which comprises a generally circular portion (24) remote from the head flange (10) and a straight portion (26) inclined to the axis of the rivet body (4) nearer to the head flange (10).

2. A blind rivet assembly according to Claim 1 characterised in that the circular portion (24) of the cross section is approximately one quarter of a circle and meets the surface of the shank (12) at 90°.

3. A blind rivet assembly according to one of Claims 1 and 2 characterised in that the straight portion (26) of the cross section meets the surface of the shank (12) at between 15° and 30°.

4. A blind rivet assembly according to any one of the preceding claims comprising two such grooves (20, 22).

5. A blind rivet assembly according to any one of the preceding claims wherein the bore (14) extends from the head flange (10) to a flat annular end surface (18) of the shank (12).

6. A blind rivet assembly according to Claim 5 wherein the mandrel (2) comprises a head (6) which has a flat under side (16) which has substantially the same diameter as the flat annular end surface (18) of the shank (12).

## Patentansprüche

1. Blindnietanordnung mit einem Dorn (2) und einem Nietkörper (4), wobei der Nietkörper (4) einen Kopfflansch (10) und einen allgemein zylindrischen Schaft (12) aufweist, wobei sich eine allgemein gleichförmige Bohrung (14) durch den Schaft (12) und den Kopfflansch (10) erstreckt, und wobei der Schaft (12) mit mindestens einer Umfangsnut (20, 22) versehen ist, dadurch gekennzeichnet, daß die Nut (20, 22) einen Querschnitt aufweist, der einen allgemein kreisförmigen Abschnitt (24), welcher vom Kopfflansch (10) weiter abgelegen ist, und einen geraden Abschnitt (26) aufweist, der näher zum Kopfflansch (10) liegt und zur Achse des Nietkörpers (4) hin geneigt ist.

2. Blindnietanordnung nach Anspruch 1, dadurch gekennzeichnet, daß der kreisförmige Abschnitt (24) des Querschnittes annähernd ein Viertel eines Kreises ausmacht und die Oberfläche des Schaftes (12) unter einem Winkel von 90° erreicht.

3. Blindnietanordnung nach Anspruch 1 oder 2, dadurch gekennzeichnet, daß der gerade Abschnitt (26) des Querschnitts die Oberfläche des Schaftes (12) unter einem Winkel zwischen 15° und 30° erreicht.

4. Blindnietanordnung nach irgendeinem der vorhergehenden Ansprüche, die zwei solcher Nuten (20, 22) aufweist.

5. Blindietanordnung nach irgendeinem der vorhergehenden Ansprüche, bei der die Bohrung (14) sich vom Kopfflansch (10) zu einer flachen, ringförmigen Endoberfläche (18) des Schaftes (12) erstreckt.

6. Blindnietanordnung nach Anspruch 5, bei der der Dorn (2) einen Kopf (6) aufweist, der eine flache Unterseite (16) besitzt, welche im wesentlichen den gleichen Durchmesser wie die flache, ringförmige Endoberfläche (18) des Schaftes (12) aufweist.

## Revendications

1. Ensemble de rivet aveugle comprenant un mandrin (2) et un corps de rivet (4), le corps de rivet (4) comprenant une collerette de tête (10) et une queue (12) de forme générale cylindrique, un perçage (14) sensiblement uniforme qui traverse la queue (12) et la collerette de tête (10), et la queue (12) étant munie d'au moins une gorge circonférentielle (20, 22), caractérisé en ce que la gorge (20, 22) possède une section qui comprend une portion à peu près circulaire (24) éloignée de la collerette de tête (10), et une portion rectiligne (26) inclinée vers l'axe du corps du rivet (4), qui est plus rapprochée de la collerette de tête (10).

2. Ensemble de rivet aveugle selon la revendication 1, caractérisé en ce que la portion circulaire (24) de la section est approximativement un quart de cercle et rencontre la surface de la queue (12) à 90°.

3. Ensemble de rivet aveugle selon une des revendications 1 et 2, caractérisé en ce que la portion rectiligne (26) de la section rencontre la surface de la queue (12) à un angle d'entre 15° et 30°.

4. Ensemble de rivet aveugle selon une quelconque des revendications précédentes, comprenant deux gorges de ce genre (20, 22).

5. Ensemble de rivet aveugle selon une quelconque des revendications précédentes, dans lequel le perçage (14) s'étend de la collerette de tête (10) jusqu'à une surface d'extrémité annulaire plate (18) de la queue (12).

6. Ensemble de rivet aveugle selon la revendication 5, dans lequel le mandrin (2) comprend une tête (6) qui possède une surface inférieure plate (16) qui a sensiblement le même diamètre que la surface d'extrémité annulaire plate (18) de la queue (12).
